# EUROPEAN PATENT SPECIFICATION

(11) **EP 0 479 523 B1**
(45) Date of publication and mention of the grant of the patent: **27.09.1995**
(21) Application number: 91308927.2
(22) Date of filing: 30.09.1991
(51) Int. Cl.: B60K 15/03, B60K 15/035

(54) **A fuel tank assembly**
Treibstoffbehälter-Anordnung
Ensemble de reservoir de carburant

(30) Priority: 29.09.1990 GB 9021247
(43) Date of publication of application: 08.04.1992
(73) Proprietor: FORD MOTOR COMPANY LIMITED, Brentwood Essex (GB); FORD FRANCE S. A., 92506 Rueil-Malmaison Cédex (FR); FORD-WERKE AKTIENGESELLSCHAFT, 50725 Köln (DE)
(72) Inventor: Pardy, Ronald, Tiptree, Essex CO5 0PN (GB); Bowles, David Thomas, Chelmsford, Essex CM3 4EZ (GB)
(74) Representative: Messulam, Alec Moses

(56) References cited:
- DE-U- 7 424 653
- US-A- 2 172 836
- PATENT ABSTRACTS OF JAPAN vol. 10, no. 92 (M-468)(2149) 9 April 1986
- PATENT ABSTRACTS OF JAPAN vol. 11, no. 352 (M-643)(2799) 18 November 1987

## Description

The present invention relates to a fuel tank assembly with means for regulating fuel levels in motor vehicle fuel tanks.

It is a safety requirement that fuel tanks be designed so that a residual volume of vapour or air is trapped above the fuel in the tank after the tank has been completely filled. The space thus occupied by a trapped volume of vapour is called the ullage space.

Where the fuel filler pipe enters the tank below the top of the tank, the tank can only be filled above the level of the filler pipe if air/vapour can escape from the top of the tank. This can be achieved by providing an escape passage which emerges from the top of the tank, which passage is itself closed off by the rising fuel level at a point designed to provide a limit to the level to which fuel can rise in the tank. This passage is referred to as a sensing tube.

A fuel tank assembly has been proposed in JP-A-60/229823, in which a first opening is provided in a side wall of the tank for the connection of a sensing tube, and a second opening for the connection of a filler pipe, the first opening for the sensing tube being located above the second opening for the filler pipe.

Conventionally, the sensing tube comprises three parts namely a stub tube projecting into the fuel tank, a stub tube connected into the filler pipe and a flexible hose connecting the two.

Ideally the open end of the sensing tube inside the fuel tank is positioned at a point where to a substantial extent the maximum level of fuel is unaffected by the attitude of the tank. In the past this has led to the sensing tube passing through the top of the tank at its centre and the opening of the tube has been located centrally at a given level in the fuel tank so that the fuel level is unaffected by the attitude of the vehicle carrying the tank.

The presence of the sensing tube on top of the fuel tank is undesirable when it comes to accommodating the fuel tank within the restricted space often available in a vehicle.

We have found a simple way of avoiding entry of the sensing tube into the top of the fuel tank.

Accordingly the present invention is for a fuel tank provided with a first opening in the side of the fuel tank for connection to a sensing tube, a second opening in the side of the fuel tank for connection to a filler pipe, the top of the second opening being located below the bottom of the first opening, characterised in that a barrier extends downwardly from the underside surface of the top of the tank to form an enclosure, said enclosure containing within its boundaries the first opening, and part of the base of the enclosure being positioned at an ullage point which represents the maximum level to which the tank can be filled, there being an opening between the enclosure and the fuel tank at least at this point but not above it.

More specifically the present invention is for a fuel tank assembly comprising a fuel tank, a sensing tube, a filler pipe, a first opening in the side of the fuel tank connected to one end of the sensing tube the second end being at a higher level, a second opening in the side of the fuel tank connected to the filler pipe, the top of the second opening being located below the bottom of the first opening, characterised in that a barrier extends downwardly from the underside surface of the top of the tank to form an enclosure, said enclosure containing within its boundaries the first opening, and part of the base of the enclosure being positioned at an ullage point which represents the maximum level to which the tank can be filled, there being an opening between the enclosure and the fuel tank at least at this point but not above it.

Normally, for a fuel tank of symmetrical design, the ullage point will lie at the centre of a plane which runs parallel with the top or bottom of the fuel tank.

Desirably the second end of the sensing tube is connected to an opening in the filler pipe at or near the end of the filler pipe remote from the fuel tank.

The base of the enclosure preferably lies in a plane hereinafter referred to as the base plane. With the fuel tank horizontally disposed, the base plane may be horizontal. Desirably however the base plane is lower at the edge of the tank than it is at the centre, the base of the enclosure extending along a line which runs from a point on or slightly above the upper level of the opening of the filler pipe to the ullage point.

Normally the base of the enclosure is open along its length.

Suitably the barrier defining the enclosure is formed by a U-shaped wall, with the base of the U-shape being located at the ullage point and the walls of the U-shape extending from the ullage point towards the side of the tank and diverging as they approach the side of the tank.

If the fuel tank is made of steel, the barrier may be welded to the under-side surface of the top of the fuel tank.

If the fuel tank is made of a plastics material, the walls of the barrier may be formed as a depression in the top surface of the fuel tank during moulding of the plastics material. It is a virtue of the present invention that the fuel tank assembly when made of plastics material can be moulded in one piece thus simplifying manufacture.

Accordingly the present invention also provides a one piece tank assembly made in a plastics material and constituted as defined above and a process for making it which comprises blow moulding the fuel tank assembly in one piece.

The present invention will now be described, by way of example, in relation to the accompanying drawings in which:-
Figure I is an isometric representation of a fuel tank assembly according to the present invention,
Figure 2 shows a diagrammatic elevational cross section of a fuel tank assembly according to the present invention,
Figure 3 shows the fuel tank assembly illustrated in Figure 2 when tilted clockwise
Figure 4 shows the fuel tank assembly illustrated in Figure 2 when tilted anti-clockwise.

Referring to Figure I, there is illustrated a fuel tank 1 provided with a filler pipe 2 and a sensing tube 3. The filler pipe 2 opens into the fuel tank 1 at an opening 4. The sensing tube 3 connects with the fuel tank 1 at an opening 5 and with the filler pipe 2 at an opening 6.

Inside the fuel tank 1 is a barrier 7 which, in plan, is U-shaped. The barrier 7 forming an enclosure which extends from a side surface 11 of the fuel tank to the centre of the tank.

The barrier 7 is in the form of a continuous wall the upper boundary of which depends from and is integral with the under-side of the top surface 10 of the fuel tank 1. The ends 9 of the barrier 7 are integral with the inside of side surface 11 of the fuel tank 1, and the opening 5 is located in the region between the ends 9 of the barrier 7.

The ullage space of tank 1 is defined by the depth and shape of barrier 7 but as will be discussed later is primarily defined by the depth of the barrier 7 at a point 13 at the centre of a plane parallel with the bottom and/or top of the tank.

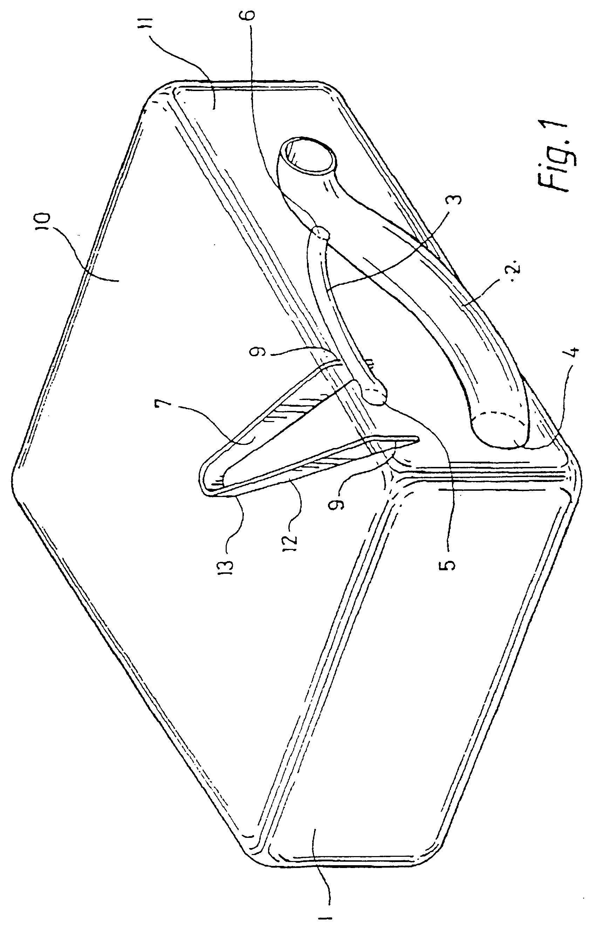

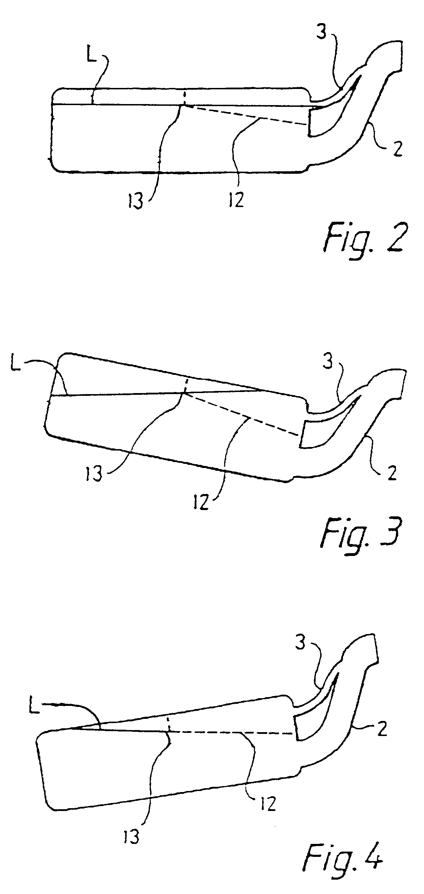

The essential features of Figure I are also shown on Figures 2, 3 and 4 but additionally these Figures illustrate how the design of the enclosure formed by barrier 7 in the fuel tank regulates the ullage space.

Referring to Figure 2, this shows, for a horizontally disposed fuel tank, the maximum amount of fuel which can be accommodated
This is set by the depth of barrier 7 at point 13. As will be appreciated, the flow of fuel into tank 1 will be unrestrained as long as trapped vapours inside the tank can escape through sensing tube 3. At the point however when the fuel seals the opening at the base of the barrier 7, vapours cannot then escape through the sensing tube 3 and the pressure in the empty space in the fuel tank 1 builds up causing fuel to rise in filler pipe 2 and thereby cut off the flow of fuel. This leaves the fuel at a maximum level L.

As can be seen from Figures 3 and 4, if the fuel tank is tilted, the tilting has no effect on the fuel- determining position of point 13 due to its position at a central point in a horizontal plane through the tank.

It is clear from both Figures 3 and 4, that fuel will continue to flow into the fuel tank until the fuel reaches the level defined by point 13. At this stage the vapours in the tank are trapped and cannot escape through the sensing tube 3, and this leads to cut off of the fuel supply.

From Figure 4, it will be recognised that tilting of tank 1 in an anticlockwise manner maintains the datum point for the ullage space. This datum point could only be exceeded if the fuel tank is tilted to an extent that is greater than would be normal at a filling station.

Figure 4 shows that the lower edge 12 of barrier 7 is designed to be horizontal at the anticipated maximum degree of tilt of the fuel tank.

## Claims

1. A fuel tank (1) provided with a first opening (5) in the side of the fuel tank (1) for connection to a sensing tube (3), a second opening (4) in the side of the fuel tank (1) for connection to a filler pipe (2), the top (10) of the second opening (4) being located below the bottom of the first opening (5), characterised in that a barrier (7) extends downwardly from the underside surface of the top (10) of the tank to form an enclosure, said enclosure containing within its boundaries the first opening (5), and part of the base (12) of the enclosure being positioned at an ullage point (13) which represents the maximum level to which the tank can be filled, there being an opening between the enclosure and the fuel tank (1) at least at this point but not above it.

2. A fuel tank (1) assembly comprising, a fuel tank (1), a sensing tube (3), a filler pipe (2), a first opening (5) in the side of the fuel tank (1) connected to one end of the sensing tube (3) the second end being at a higher level, a second opening (4) in the side of the fuel tank (1) connected to the filler pipe (2), the top (10) of the second opening (4) being located below the bottom of the first opening (5), characterised in that a barrier (7) extends downwardly from the underside surface of the top (10) of the tank to form an enclosure, said enclosure containing within its boundaries the first opening (5), and part of the base (12) of the enclosure being positioned at an ullage point (13) which represents the maximum level to which the tank can be filled, there being an opening between the enclosure and the fuel tank (1) at least at this point but not above it.

3. A fuel tank (1) assembly as claimed in claim 2 wherein the second end of the sensing tube (3) is connected to an opening in the filler pipe (2) at or near the end of the filler pipe (2) remote from the fuel tank (1).

4. A fuel tank (1) assembly as claimed in claim 2 or 3 wherein the base (12) of the enclosure extends along a line which runs from a point on or slightly above the upper level of the opening of the filler pipe (2) to the ullage point.

5. A fuel tank (1) assembly as claimed in claim 4 wherein the base (12) of the enclosure is open along its length.

6. A fuel tank (1) assembly as claimed in any of the preceding claims wherein the barrier (7) defining the enclosure is formed by a in-shaped wall, with the base (12) of the U-shape being located at the ullage point and the walls of the U-shape extending from the ullage point towards the side of the tank and diverging as they approach the side of the tank.

7. A fuel tank (1) assembly as claimed in any of the preceding claims wherein the fuel tank (1) is made of steel and the barrier (7) is welded to the underside surface of the top (10) of the fuel tank (1).

8. A fuel tank (1) assembly as claimed in any of claims 1 to 6 wherein the fuel tank (1) is made of a plastics material and the walls of the barrier (7) are formed as a depression in the top (10) surface (10) of the fuel tank (1) during moulding of the plastics material.

9. A process for making a fuel tank (1) assembly as claimed in claim 8 which comprises blow moulding the fuel tank (1) assembly in one piece.

## Patentansprüche

1. Ein Treibstofftank (1), der mit einer ersten Öffnung (5) in der Seite des Treibstofftanks (1) zum Anschluß an einem Meßrohr (3) bereitgestellt ist, mit einer zweiten Öffnung (4) in der Seite des Treibstofftanks (1) zum Anschluß an einem Füllrohr (2), wobei sich der obere Teil (10) der zweiten Öffnung (4) unterhalb des unteren Teils der ersten Öffnung (5) befindet; dadurch gekennzeichnet, daß sich eine Abtrennung (7) nach unten von der unteren Oberfläche des oberen Teils (10) des Tanks zum Bilden einer Umhüllung erstreckt, wobei diese Umhüllung in ihren Grenzen die erste Öffnung (5) enthält und ein Teil der Basis (12) der Umhüllung an einem Punkt des Leerraumes (13) liegt, der die maximale Füllhöhe des Tanks darstellt, wobei sich eine Öffnung zwischen der Umhüllung und dem Treibstofftank (1) mindestens an diesem Punkt, aber nicht oberhalb davon befindet.

2. Eine Treibstofftankmontage (1), umfassend einen Treibstofftank (1), ein Meßrohr (3), ein Füllrohr (2), eine an einem Ende des Meßrohres (3) angeschlossene erste Öffnung (5) in der Seite des Treibstofftanks (1), wobei sich das zweite Ende an einem höher gelegenen Punkt befindet, eine zweite Öffnung (4) in der Seite des Treibstofftanks (1), die am Füllrohr (2) angeschlossen ist, wobei sich der obere Teil (10) der zweiten Öffnung (4) unterhalb des unteren Teils der ersten Öffnung (5) befindet, dadurch gekennzeichnet, daß sich eine Abtrennung (7) nach unten von der unteren Oberfläche des oberen Teils (10) des Tanks zum Bilden einer Umhüllung erstreckt, wobei diese Umhüllung in ihren Grenzen die erste Öffnung (5) enthält und ein Teil der Basis (12) der Umhüllung an einem Punkt des Leerraumes (13) liegt, der die maximale Füllhöhe des Tanks darstellt, wobei sich eine Öffnung zwischen der Umhüllung und dem Treibstofftank (1) mindestens an diesem Punkt, aber nicht oberhalb davon befindet.

3. Eine Treibstofftankmontage (1) nach Anspruch 2, worin das zweite Ende des Meßrohres (3) an einer Öffnung im Füllrohr (2) am oder in der Nähe jenes Endes des Füllrohres (2), das entfernt vom Treibstofftank (1) liegt, angeschlossen ist.

4. Eine Treibstofftankmontage (1) nach Anspruch 2 oder 3, worin sich die Basis (12) der Umhüllung entlang einer Linie erstreckt, die von einem Punkt am oder leicht oberhalb des Höchststandes der Öffnung des Füllrohres (2) zum Punkt des Leerraumes hin erstreckt.

5. Eine Treibstofftankmontage (1) nach Anspruch 4, worin die Basis (12) der Umhüllung auf ihrer Längsseite offen ist.

6. Eine Treibstofftankmontage (1) nach irgendeinem der vorhergehenden Ansprüche, worin die Abtrennung (7), die die Umhüllung definiert, durch eine U-förmige Wand gebildet ist, wobei die Basis (12) der U-Form am Punkt des Leerraumes liegt und sich die Wände der U-Form vom Punkt des Leerraumes zur Seite des Tanks hin erstrecken und in dem Maße auseinandergehen, wie sie sich der Seite des Tanks nähern.

7. Eine Treibstofftankmontage (1) nach irgendeinem der vorhergehenden Ansprüche, worin der Treibstofftank (1) aus Stahl hergestellt ist und die Abtrennung (7) an der unteren Oberfläche des Oberteils (10) des Treibstofftanks (1) angeschweißt ist.

8. Eine Treibstofftankmontage (1) nach irgendeinem der Ansprüche 1 bis 6, worin der Treibstofftank (1) aus einem Kunststoff hergestellt ist und die Wände der Abtrennung (7) als Vertiefung in der oberen Oberfläche (10) des Treibstofftanks (1) während des Formens des Kunststoffes gebildet sind.

9. Ein Verfahren zum Herstellen einer Treibstofftankmontage (1) nach Anspruch 8, das das Blasformen der Treibstofftankmontage (1) aus einem Stück umfaßt.

## Revendications

1. Réservoir de carburant (1) muni d'une première ouverture (5) dans le côté du réservoir de carburant (1) afin d'assurer la connexion avec un tube de détection (3), une seconde ouverture (4) dans le côté du réservoir de carburant (1) destinée à assurer la connexion avec un tuyau d'alimentation (2), la partie supérieure (10) de la seconde ouverture (4) étant placée sous le fond de la première ouverture (5), caractérisé en ce qu'une barrière (7) s'étend vers le bas depuis la surface inférieure de la partie supérieure (10) du réservoir de manière à former un boîtier, ledit boîtier contenant à l'intérieur de ses limites la première ouverture (5), et une partie de la base (12) du boîtier étant placée en un point de perte par fuite (13) qui représente le niveau maximum auquel le réservoir Peut être rempli, une ouverture entre le boîtier et le réservoir de carburant (1) étant placée au moins en ce point mais non au dessus de celui-ci.

2. Unité de réservoir de carburant (1) comprenant un réservoir de carburant (1) (1), un tube de détection (3), un tuyau d'alimentation (2), une première ouverture (5) dans le côté du réservoir de carburant (1) reliée à une extrémité du tube de détection (3), la seconde extrémité étant placée plus haut, une seconde ouverture (4) dans le côté du réservoir de carburant (1) reliée à un tuyau d'alimentation (2), la partie supérieure (10) de la seconde ouverture (4) étant placée sous le fond de la première ouverture (5), caractérisée en ce qu'une barrière (7) s'étend vers le bas depuis la surface inférieure de la partie supérieure (10) du réservoir de manière à former un boîtier, ledit boîtier contenant à l'intérieur de ses limites la première ouverture (5) , et une partie de la base (12) du boîtier étant placée en un point de perte par fuite (13) qui représente le niveau maximum auquel le réservoir peut être rempli, une ouverture entre le boîtier et le réservoir de carburant (1) étant placée au moins en ce peint mais non au dessus de celui-ci.

3. Unité de réservoir de carburant (1) selon la revendication 2, dans laquelle la seconde extrémité du tube de détection (3) est reliée à une ouverture dans le tuyau d'alimentation (2) sur ou à proximité de l'extrémité du tuyau d'alimentation (2), éloignée du réservoir de carburant (1).

4. Unité de réservoir de carburant (1) selon la revendication 2 ou 3, dans laquelle la base (12) du boîtier s'étend le long d'une ligne qui s'étend d'un point situé sur ou légèrement au dessus du niveau supérieur de l'ouverture du tuyau d'alimentation (2) vers le point de perte par fuite.

5. Unité de réservoir de carburant (1) selon la revendication 4, dans laquelle la base (12) du boîtier est ouverte le long de sa longueur.

6. Unité de réservoir de carburant (1) selon l'une des revendications précédentes, dans laquelle la barrière (7) définissant le boîtier est formée par une paroi en forme de U, la base (12) de la forme en U étant placée sur le point de perte par fuite et les parois de la forme en U s'étendant depuis le point de perte par fuite vers le côté du réservoir et divergeant lorsqu'elles s'approchent du côté du réservoir.

7. Unité de réservoir de carburant (1) selon l'une des revendications précédentes, dans laquelle le réservoir de carburant (1) est fait d'acier et la barrière (7) est soudée à la surface inférieure de la partie supérieure (10) du réservoir de carburant (1).

8. Unité de réservoir de carburant (1) selon l'une des revendications 1 à 6, dans laquelle le réservoir de carburant (1) est fait de matière plastique et les parois de la barrière (7) sont formées comme une dépression dans la surface supérieure (10) du réservoir de carburant (1) durant le moulage de la matière plastique.

9. Procédé pour fabriquer une unité de réservoir de carburant (1) selon la revendication 8, qui consiste à souffler par extrusion l'unité de réservoir de carburant (1) en une seule pièce.
